# FASCICULE DE BREVET EUROPEEN

(11) **EP 2 946 706 B1**
(45) Date de publication et mention de la délivrance du brevet: **17.07.2019**
(21) Numéro de dépôt: 15168042.8
(22) Date de dépôt: 18.05.2015
(51) Int. Cl.: A47J 31/44, A47J 31/60

(54) **DISPOSITIF DE PRODUCTION DE BOISSONS À BASE DE LAIT MUNI D'UN SYSTÈME D'ACCOUPLEMENT ET MACHINE À CAFÉ COMPORTANT UN TEL DISPOSITIF**
VORRICHTUNG ZUR ZUBEREITUNG VON GETRÄNKEN AUF MILCHBASIS, DIE MIT EINEM ANSCHLUSSSYSTEM VERSEHEN IST, UND KAFFEEMASCHINE, DIE EINE SOLCHE VORRICHTUNG UMFASST
DEVICE FOR PRODUCING MILK-BASED BEVERAGES PROVIDED WITH A COUPLING SYSTEM AND COFFEE MACHINE COMPRISING SUCH A DEVICE

(30) Priorité: 23.05.2014 FR 1454674
(43) Date de publication de la demande: 25.11.2015
(73) Titulaire: SEB S.A., 69130 Ecully (FR)
(72) Inventeur: Beaudet, Olivier, 61140 GENESLAY (FR); Dupuy, Christian, 53440 LA BAZOGE MONTPINCON (FR); Guerin, Christophe, 53150 St CHRISTOPHE du LUAT (FR)
(74) Mandataire: Bourrières, Patrice

(56) Documents cités:
- EP-A1- 2 047 779
- EP-A1- 2 606 783
- WO-A1-2011/064702

## Description

La présente invention se rapporte au domaine technique général des appareils de production de boissons à base de lait, en particulier des machines à café munies d'un embout de buse de sortie vapeur et des dispositifs destinés à coopérer avec l'embout de buse de sortie vapeur pour produire une boisson à base de lait, notamment de lait chauffé et moussé.

Il est connu du document US5473972 de réaliser un dispositif de production d'une boisson à base de lait, notamment de lait moussé, destinée à coopérer avec un embout de buse de sortie vapeur d'une machine à café, l'embout de buse de sortie vapeur étant agencé horizontalement. Le dispositif comporte un conduit d'entrée vapeur comprenant à une extrémité un réceptacle. Le dispositif est accouplé à la machine en introduisant l'embout de buse de sortie vapeur dans le réceptacle selon une direction horizontale pour établir une liaison étanche entre l'embout de buse de sortie vapeur et le conduit d'entrée vapeur. Le maintien en position du dispositif sur la machine est uniquement assuré par le frottement d'une paroi cylindrique du réceptacle et d'un joint torique agencé sur une paroi externe de l'embout de buse de sortie vapeur. Ainsi, si l'utilisateur positionne mal le dispositif sur la machine, notamment s'il n'introduit pas suffisamment le réceptacle sur l'embout de buse de sortie vapeur, des fuites de vapeur peuvent apparaitre, voire dans une situation extrême, un jet de vapeur qui pourrait blesser l'utilisateur. Un autre dispositif est aussi connu du document EP 2 606 783 A1.

Une solution pour remédier à ce problème consiste à équiper la machine à café avec un système de détection de la présence du dispositif. Cependant, l'installation d'un tel système nécessite des modifications importantes et couteuses de la machine.

Un but de la présente invention est de proposer un dispositif de production d'une boisson à base de lait ainsi qu'une machine à café mettant en oeuvre ce dispositif qui présente une mise en oeuvre simple et ergonomique et qui fonctionne en toute sécurité.

Un autre but de la présente invention est de proposer un dispositif de production d'une boisson à base de lait ainsi qu'une machine à café mettant en oeuvre ce dispositif qui présente une conception simple et qui soit économique à mettre en oeuvre.

Ces buts sont atteints avec un dispositif de production d'une boisson à base de lait destiné à coopérer avec un embout de buse de sortie vapeur d'une machine à café, le dispositif comportant un conduit d'entrée vapeur, le dispositif comportant un système d'accouplement à l'embout de buse de sortie vapeur comprenant au moins un mors mobile entre une position accouplée dans laquelle une liaison étanche est établie entre l'embout de buse de sortie vapeur et le conduit d'entrée vapeur et dans laquelle le dispositif ne peut pas être séparé de l'embout de buse de sortie vapeur, et une position désaccouplée dans laquelle le dispositif peut être séparé de l'embout de buse de sortie vapeur, caractérisé en ce que le système d'accouplement comporte un mors fixe.

Ainsi le mors mobile du système d'accouplement à l'embout de buse de sortie vapeur permet, dans la position accouplée, un maintien sûr de la liaison étanche établie entre l'embout de buse de sortie vapeur et le conduit d'entrée vapeur.

De plus, le dispositif de production d'une boisson à base de lait comporte le système d'accouplement à l'embout de buse de sortie vapeur d'une machine à café. Ainsi, la machine à café coopérant avec ce dispositif peut être une machine à café standard munie d'une buse de moussage agencée de manière amovible sur la buse de sortie vapeur. L'embout de buse de sortie vapeur est compatible ou rendue compatible facilement avec le dispositif, sans nécessiter de modification du système de commande de la machine à café.

Cette disposition permet d'obtenir un système d'accouplement de conception simple et économique à mettre en oeuvre. De plus le mors fixe peut comporter des moyens de guidage de l'embout de buse de sortie vapeur vers le conduit d'entrée vapeur lors de l'accouplement.

Avantageusement, le mors mobile est mobile en translation.

Un déplacement en translation du mors mobile permet d'obtenir un maintien sûr de la liaison étanche établie entre l'embout de buse de sortie vapeur et le conduit d'entrée vapeur.

De préférence, le mors mobile est formé par un réceptacle agencé à une extrémité du conduit d'entrée vapeur et destiné à coopérer avec une extrémité de l'embout de buse de sortie vapeur.

Cette disposition permet d'obtenir une conception simple et économique du système d'accouplement. De plus, la liaison formée par le réceptacle, notamment en entourant l'extrémité de l'embout de buse de sortie vapeur, est une liaison qui peut être rendue étanche facilement.

Avantageusement, le système d'accouplement comporte des moyens de manoeuvre du mors mobile.

Ainsi le mors mobile peut être entrainé entre la position accouplée et la position désaccouplée et inversement par tout type de moyens de manoeuvre, manuels ou automatiques.

De préférence, les moyens de manoeuvre comportent un levier de manoeuvre du mors mobile.

Cette disposition permet de réaliser de manière très économique les moyens de manoeuvre du mors mobile.

Avantageusement, le dispositif de production d'une boisson à base de lait comporte un fond sur lequel il repose et l'effort appliqué sur le levier de manoeuvre pour entrainer le mors mobile entre la position désaccouplée et la position accouplée passe par le fond.

Cette disposition permet d'obtenir un dispositif stable lors de l'opération d'accouplement entre l'embout de buse de sortie vapeur et le conduit d'entrée vapeur.

De préférence, le dispositif comporte un réservoir recevant le lait et un couvercle, le système d'accouplement étant agencé sur le couvercle.

Cette disposition permet de positionner le système d'accouplement, notamment les moyens de manoeuvre en partie supérieure du dispositif et ainsi de rendre les moyens de manoeuvre facilement accessibles par l'utilisateur.

Avantageusement, le levier est agencé sur une face supérieure du couvercle et le levier est mobile en rotation entre une position déployée dans laquelle le mors mobile est en position désaccouplée, et une position rabattue sur le couvercle dans laquelle le mors mobile est en position accouplée.

Cette disposition permet d'obtenir un levier très facilement accessible par l'utilisateur. De plus, la position du levier est bien visible et permet à l'utilisateur de facilement identifier si l'accouplement est réalisé.

De préférence, le système d'accouplement comporte un logement de réception de forme conique destiné à guider l'embout de buse de sortie vapeur vers le mors mobile lors de l'accouplement.

Cette disposition permet d'obtenir un dispositif permettant une manoeuvre d'accouplement plus ergonomique.

L'invention concerne également une machine à café comportant un dispositif de production d'une boisson à base de lait tel que précédemment décrit.

Avantageusement, l'embout de buse de sortie vapeur est coudé vers le bas.

Ainsi, en cas de mauvaise manoeuvre, notamment une commande de la sortie vapeur alors que le dispositif n'est pas en place, le jet de vapeur est dirigé vers le bas et non vers l'utilisateur. Ainsi, cette disposition permet d'obtenir un fonctionnement plus sûr, même en cas de mauvaise manoeuvre.

De préférence, le dispositif de production d'une boisson à base de lait est amené dans un mouvement d'approche horizontal vers la machine à café pour positionner l'embout de buse de sortie vapeur entre le mors fixe et le mors mobile.

Cette disposition permet d'obtenir un mouvement simple et ergonomique pour effectuer l'accouplement du dispositif à la machine à café.

Avantageusement, l'embout de buse de sortie vapeur comporte un joint d'étanchéité permettant d'établir une liaison étanche entre l'embout de buse de sortie vapeur et le conduit d'entrée vapeur.

Cette disposition permet de réaliser une liaison étanche entre l'embout de buse de sortie vapeur et le conduit d'entrée vapeur de manière très simple et très économique.

L'invention sera mieux comprise à l'étude des modes de réalisation pris à titre nullement limitatif et illustrés dans les figures annexées dans lesquelles :
- La figure 1 illustre une vue en perspective d'un dispositif de production d'une boisson à base de lait coopérant avec un embout de buse de sortie vapeur d'une machine à café selon un mode particulier de réalisation de l'invention.
- La figure 2 illustre une vue en perspective du dispositif de production d'une boisson à base de lait coopérant avec l'embout de buse de sortie vapeur dans une position accouplée, illustré sur la figure 1.
- La figure 3 illustre une vue en perspective du dispositif de production d'une boisson à base de lait illustré sur la figure 1, le dispositif et l'embout de buse de sortie vapeur étant dans une position désaccouplée.
- La figure 4 illustre une vue éclatée en perspective du dispositif de production d'une boisson à base de lait et de l'embout de buse de sortie vapeur illustré sur la figure 1.
- La figure 5 illustre une vue suivant le plan de coupe V du système de moussage du dispositif de production d'une boisson à base de lait illustré sur la figure 4.
- La figure 6 illustre une vue suivant le plan de coupe VI du dispositif de production d'une boisson à base de lait et de l'embout de buse de sortie vapeur illustré sur la figure 2.
- La figure 7 illustre une vue suivant le plan de coupe VII du dispositif de production d'une boisson à base de lait illustré sur la figure 3.
- La figure 8 illustre une vue en perspective du dispositif de manoeuvre du mors mobile du dispositif de production d'une boisson à base de lait et de l'embout de buse de sortie vapeur illustré sur la figure 1.
- La figure 9 illustre une vue de détail en éclaté de la buse de sortie café et l'extrémité du conduit de distribution du dispositif de production d'une boisson à base de lait et de la machine à café illustré à la figure 1.
- La figure 10 illustre une vue de face du dispositif de production d'une boisson à base de lait coopérant avec la machine à café illustré à la figure 1, la buse de sortie café ainsi que l'extrémité du conduit de distribution étant en position relevée.
- La figure 11 illustre une vue de face du dispositif de production d'une boisson à base de lait coopérant avec la machine à café illustré à la figure 1, la buse de sortie café ainsi que l'extrémité du conduit de distribution étant en position abaissée.
- La figure 12 illustre une vue en perspective écorchée du dispositif de production d'une boisson à base de lait illustré à la figure 1, le système de moussage étant en position assemblée et le système d'accouplement en position accouplée.
- La figure 13 illustre une vue en perspective écorchée du dispositif de production d'une boisson à base de lait illustré à la figure 1, le système de moussage étant en position extraite et le système d'accouplement en position désaccouplée.

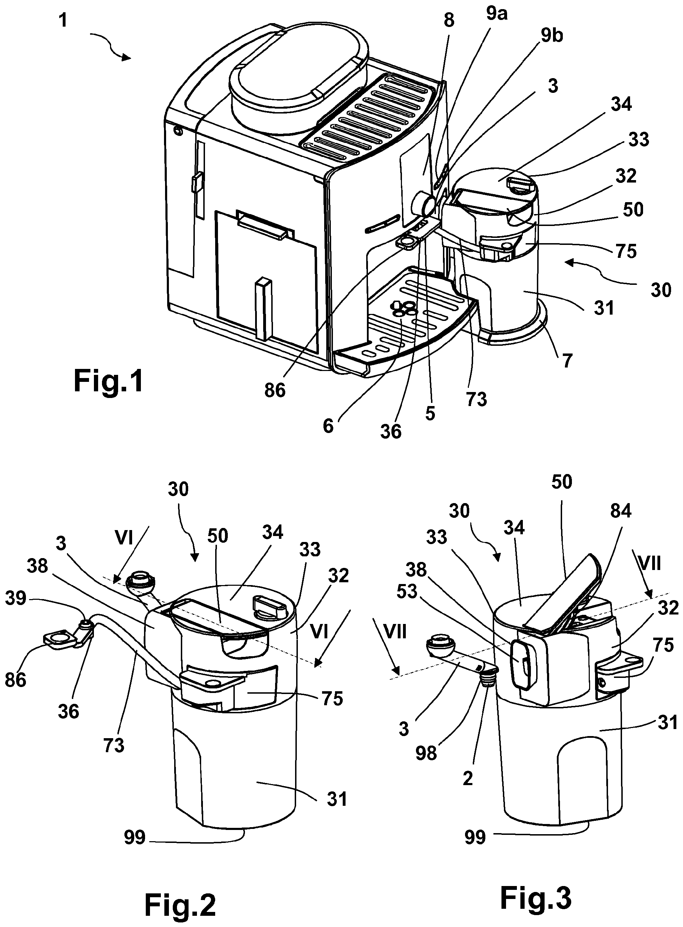

Dans l'exemple de réalisation représenté à la figure 1, un dispositif 30 de production d'une boisson à partir de lait est accouplée à un embout de buse de sortie vapeur 2 d'une machine à café 1. La machine à café 1 comporte une chaudière (non illustrée sur les figures) permettant de produire de l'eau chaude et/ou de la vapeur pour alimenter l'embout de buse de sortie vapeur 2. La machine à café 1 comporte un conduit vapeur 3 articulé (Fig.3), qui s'étend vers l'extérieur de la machine à café 1 et se termine par l'embout de buse de sortie vapeur 2. L'embout de buse de sortie vapeur 2 est agencé verticalement pour que le jet de vapeur soit dirigé vers le bas. La machine à café 1 comporte une chambre d'infusion (non illustrée sur les figures) alimentée en eau chaude pour préparer un café qui est distribué par une buse de sortie café 5 agencée au-dessus d'un repose-tasse 6 recevant un récipient (non illustré sur les figures).

La machine à café 1 peut être à la base une machine à café comportant une buse de moussage et de réchauffage de lait amovible telle que décrite dans la demande de brevet EP2606783. La buse de moussage et de réchauffage est détachée de l'embout de buse de sortie vapeur 2 et le dispositif 30 de production d'une boisson à partir de lait, notamment de lait chauffé et moussé, est accouplé en lieu et place à l'embout de buse de sortie vapeur 2. Le dispositif 30 comporte un conduit de distribution 73 du lait chauffé et moussé comprenant une extrémité 36 libre. L'extrémité 36 par laquelle s'écoule le lait chauffé et moussé est agencée au voisinage de la buse de sortie café 5 de manière détachable et permet de réaliser notamment un cappuccino. La machine à café 1 peut comporter une base de réception 7 du dispositif 30 agencé à coté du repose-tasse 6. La machine à café 1 comporte un tableau de commande 8 comportant notamment un bouton de commande 9a d'un cycle de production de vapeur. Le tableau de commande 8 peut comporter un bouton de commande 9b de distribution d'un cappuccino, soit l'enchainement d'un cycle de distribution de lait chaud moussé et d'un cycle de distribution d'un café.

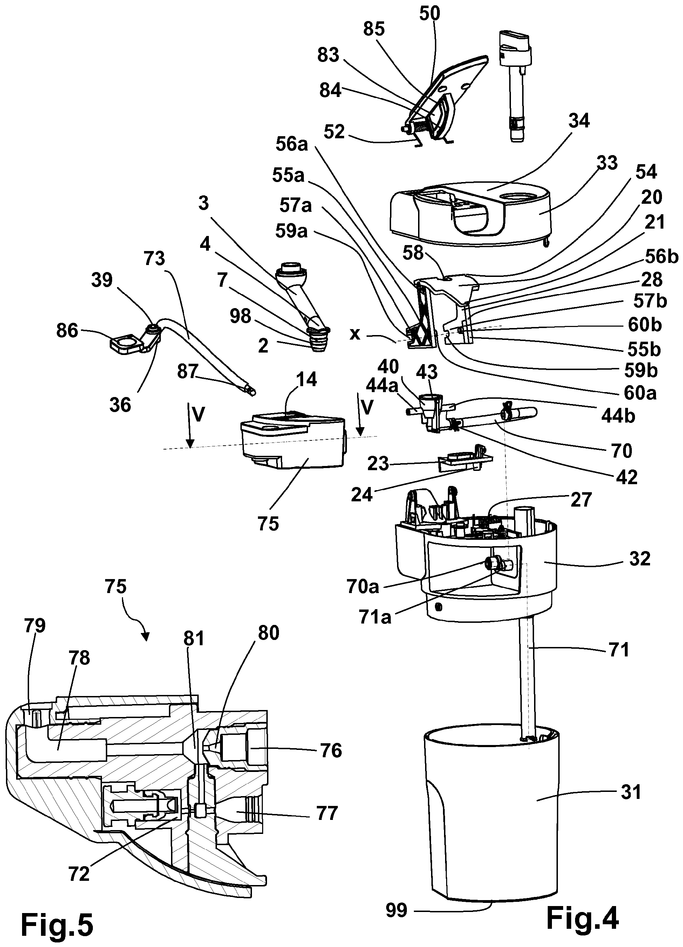

Conformément aux figures 4 et 5, le dispositif 30 comporte un réservoir 31 permettant de recevoir du lait et un système de moussage 75. Le système de moussage 75 se présente sous la forme d'une cassette amovible du dispositif 30 pour faciliter son nettoyage. Le dispositif 30 comporte un couvercle 32 disposé sur le réservoir 31. Le système de moussage 75 est agencé de manière amovible dans le couvercle 32. Le dispositif 30 comporte un conduit d'entrée vapeur 70, un conduit lait 71, un conduit air 72 et le conduit de distribution 73 du lait chauffé et moussé. Le conduit d'entrée vapeur 70 comporte une extrémité 70a qui est raccordée au système de moussage 75 par une chambre d'entrée 76. La chambre d'entrée 76 comprend une portion convergente 80 apte à créer un effet venturi lors de l'injection de la vapeur, c'est-à-dire apte à créer une dépression dans une cavité 81 agencée en aval de la portion convergente 80. Le conduit lait 71 comporte une extrémité 71a qui est raccordée au système de moussage 75 par une chambre d'entrée 77 reliée à la cavité 81. Le système de moussage 75 comporte le conduit air 72 qui relie l'air extérieur à la cavité 81. La dépression créée dans la cavité 81 permet d'aspirer dans cette cavité 81 du lait et de l'air qui vont se mélanger à la vapeur pour former le lait moussé. Le conduit de distribution 73 du lait moussé est raccordé au système de moussage 75 par une chambre de sortie 78 reliée à la cavité 81.

Tel que visible aux figures 4 à 8, le dispositif 30 de production d'une boisson à partir de lait comporte un système d'accouplement à l'embout de buse de sortie vapeur 2 comportant un mors fixe 46 et un mors 40 mobile. Le mors 40 est mobile entre une position accouplée dans laquelle une liaison étanche est établie entre l'embout de buse de sortie vapeur 2 et le conduit d'entrée vapeur 70 et dans laquelle le dispositif 30 ne peut pas être séparé de l'embout de buse de sortie vapeur 2, et une position désaccouplée dans laquelle le dispositif 30 peut être séparé de l'embout de buse de sortie vapeur 2. Le mors 40 mobile est formé par un réceptacle 41 comprenant un conduit latéral 42 au conduit d'entrée vapeur 70. Ainsi, le mors 40 mobile forme une extrémité du conduit d'entrée vapeur 70. Pour permettre la mobilité du mors 40, le conduit d'entrée vapeur 70 est réalisé au moins partiellement en un matériau souple. Le réceptacle 41 a une forme générale conique qui reprend la forme extérieure de l'embout de buse de sortie vapeur 2. Le réceptacle 41 comporte une ouverture supérieure 43 dans laquelle l'embout de buse de sortie vapeur 2 est inséré lors de l'accouplement.

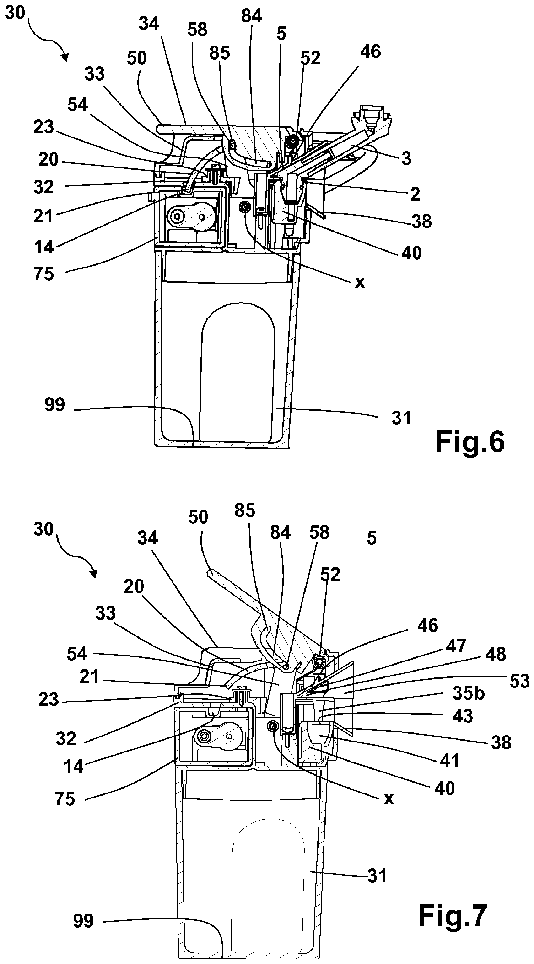

Le mors 40 mobile est agencé dans le couvercle 32 et il est mobile suivant une direction verticale à l'encontre du mors fixe 46 lors de l'accouplement. Le mors 40 mobile comporte deux tourillons 44a, 44b latéraux coopérant avec deux fentes 35a (non représenté sur les figures), 35b ménagées dans le couvercle 32. Le mors fixe 46 est agencé dans le couvercle 32, au-dessus du mors 40 mobile et comprend une paroi 47 définissant un logement de réception 48 d'une face supérieure 4 de l'embout de buse de sortie vapeur 2 (Fig.7).

Le couvercle 32 comporte une paroi 38 de forme tronconique s'étendant radialement vers l'extérieur et formant un logement 53 de réception destiné à guider l'embout de buse de sortie vapeur 2 au-dessus du mors 40 mobile, lors de l'accouplement.

Le système d'accouplement comporte un levier 50 de manoeuvre du mors 40 mobile. Le couvercle 32 comporte un capot supérieur 33 définissant une face supérieure 34 du couvercle 32 sur laquelle le levier 50 est agencé. Le levier 50 est mobile en rotation entre une position déployée au-dessus de la face supérieure 34 dans laquelle le mors 40 mobile est en position désaccouplée (Fig. 3 et 7) et une position rabattue sur la face supérieure 34 dans laquelle le mors 40 mobile est en position accouplée (Fig.2 et 6). Le levier 50 comporte une nervure inférieure 83 comprenant un chemin de came 84.

Le système d'accouplement comporte une pièce de transmission 54 du mouvement du levier 50 au mors 40 mobile. La pièce de transmission 54 comporte deux parois latérales 55a, 55b parallèles, en forme de L. Chaque paroi latérale 55a, 55b comporte donc une grande branche 56a, 56b et une petite branche 57a, 57b liées entre elles à la base du L. La pièce de transmission 54 comporte à la base du L deux tourillons 60a, 60b. Ainsi la pièce de transmission est montée mobile en rotation dans le couvercle 32 autour d'un axe x passant par les tourillons 60a, 60b. Les grandes branches 56a, 56b sont reliées entre elles à partir de leurs extrémités par une tige 58. Les petites branches 57a, 57b comportent à leurs extrémités des logements 59a, 59b de forme allongée, sensiblement oblongue. La tige 58 coopère avec le chemin de came 84 du levier 50 et les logements 59a, 59b coopèrent avec les tourillons 44a, 44b du mors 40 mobile. Le chemin de came 84 comporte une portion d'extrémité 85 sensiblement verticale lorsque le levier 50 est en position rabattue et qui forme une inflexion dans le profil du chemin de came 84. Le levier 50 est maintenu en position déployée sous l'action d'un ressort de rappel 52.

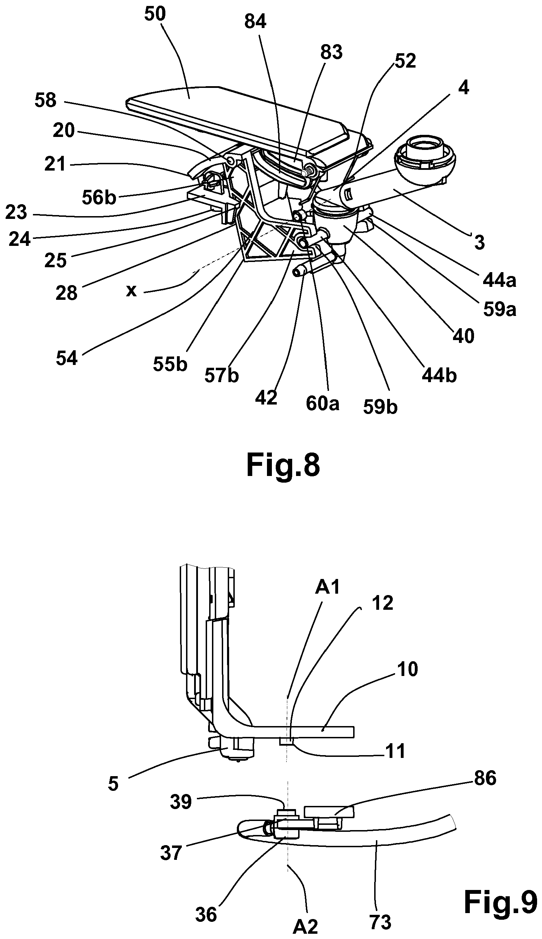

Conformément à la figure 9, la buse de sortie café 5 comporte une patte de préhension 10 s'étendant horizontalement vers l'extérieur de la machine à café. La patte de préhension 10 comprend une protubérance 11, sensiblement cylindrique d'axe A1, qui s'étend vers le bas. La protubérance 11 comprend une partie magnétique 12, réalisée notamment en un acier ferromagnétique.

L'extrémité 36 du conduit de distribution 73 comporte un aimant 37 agencé sous un logement de réception 39. Le logement de réception 39 présente une forme cylindrique d'axe A2, complémentaire de la forme de la protubérance 11 avec laquelle il est destiné à coopérer pour assembler l'extrémité 36 sur la buse de sortie café 5. L'extrémité 36 du conduit de distribution 73 comporte une poignée 86 de préhension, s'étendant perpendiculairement à l'axe A2 du logement de réception 39.

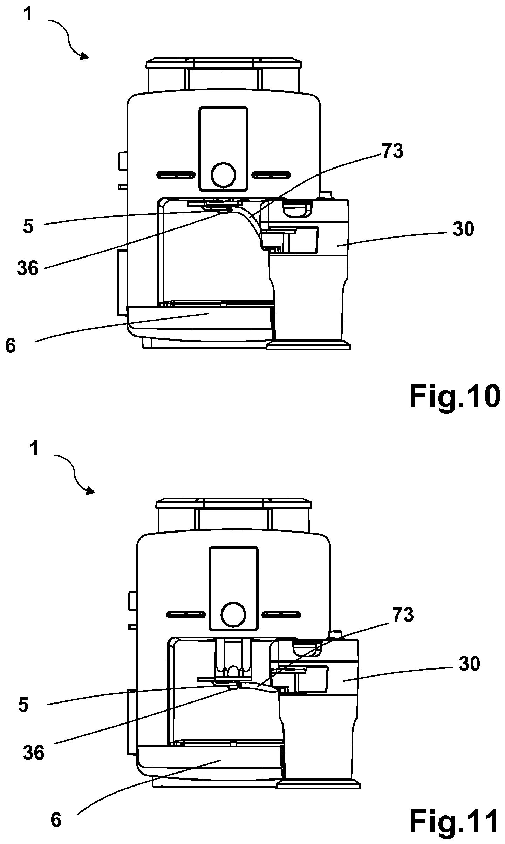

Tel que visible aux figures 10 et 11, l'extrémité 36 du conduit de distribution 73 est agencée sur la buse de sortie café 5. La buse de sortie café 5 est mobile entre une position relevée (Fig. 10) dans laquelle un récipient de grande taille peut être placé sur le repose-tasse 6 et une position abaissée (Fig.11) dans laquelle un récipient de petite taille peut être placé sur le repose-tasse 6. Le conduit de distribution 73 est formé dans une partie centrale par un tube souple en silicone.

Conformément aux figures 4 et 5, le conduit de distribution 73 comporte un embout 87 présentant une forme cylindrique. L'embout 87 est destiné à coopérer avec une extrémité 79 (Fig. 5) de la chambre de sortie 78 du système de moussage 75. L'extrémité 79 comporte une forme complémentaire de la forme cylindrique de l'embout 87 et un revêtement souple pour permettre d'assembler de manière étanche ou de séparer la conduite de distribution 73 du système de moussage 75.

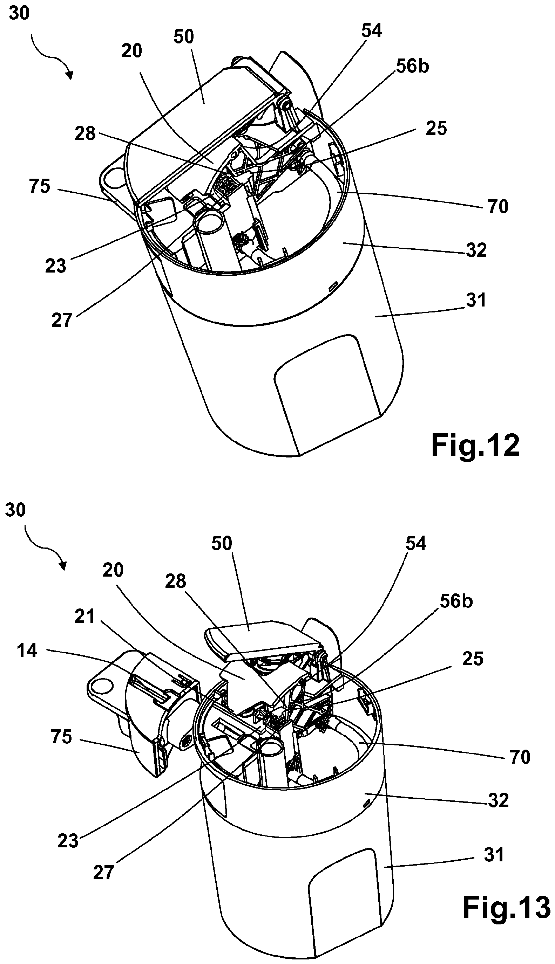

Tel que visible aux figures 4 à 7, 12 et 13, la pièce de transmission 54 du système d'accouplement comporte une paroi 20 présentant une forme en arc de cercle. La paroi 20 comporte une extrémité de forme trapézoïdale formant un verrou 21. Le verrou 21 est mobile entre une position de maintien (Fig.6 et 12) du système de moussage 75 lorsque le système d'accouplement est en position accouplée et une position de libération (Fig.7 et 13) du système de moussage lorsque le système d'accouplement est en position désaccouplée.

Le système de moussage 75 est amovible du couvercle 32 entre une position assemblée (Fig.12) et une position extraite (Fig.13). Le passage de la position extraite à la position assemblée se fait par une translation horizontale. Le système de moussage comporte une cavité 14. Le verrou 21 en position de maintien est agencé dans la cavité 14 pour empêcher l'extraction du système de moussage 75. Le verrou 21 en position de libération est en dehors de la cavité 14 pour permettre l'extraction du système de moussage 75.

Conformément aux figures 4 à 8, 12 et 13, le dispositif 30 comporte une butée 23 agencée dans le couvercle 32 de manière coulissante en translation entre une position bloquée et une position désengagée. La butée 23 comporte une excroissance 24 (Fig.4) coopérant avec le système de moussage 75 pour faire passer la butée 23 de la position bloquée à la position désengagée lorsque le système de moussage 75 passe de la position extraite à la position assemblée. La butée 23 est soumise à l'effort de rappel d'un ressort 27 pour faire passer la butée 23 de la position désengagée à la position bloquée.

La butée 23 comporte un bossage 25 qui s'étend vers la pièce de transmission 54, plus particulièrement vers une face 28 de la grande branche 57b. Lorsque le système d'accouplement est en position désaccouplée et que le système de moussage 75 est en position extraite, la butée 23 est en position bloquée dans laquelle le bossage 25 est agencé en vis-à-vis de la face 28 (Fig.13). Ainsi, la pièce de transmission 54 ne peut pivoter et le système d'accouplement est immobilisé. Si le système de moussage 75 est introduit en position assemblée, le système de moussage 75 coopère avec l'excroissance 24 pour faire passer la butée 23 en position désengagée dans laquelle le bossage 25 est décalé de la face 28 (Fig.8 et 12). Ainsi, la pièce de transmission 54 peut pivoter et le système d'accouplement est libéré.

En fonctionnement, l'utilisateur verse du lait dans le réservoir 31 et repositionne le couvercle 32 sur le réservoir 31. Il relève le levier 50 dont le chemin de came 84 agit sur la tige 58 de la pièce de transmission 54 pour la faire pivoter. Le pivotement de la pièce de transmission 54 induit le pivotement des logements 59a, 59b qui entrainent les tourillons 44a, 44b et le mors 40 mobile vers le bas en l'écartant du mors fixe 46 pour créer un espace de réception de l'embout de buse de sortie vapeur 2 (Fig. 7).

L'utilisateur positionne, dans un mouvement d'approche horizontal du dispositif 30 vers la machine à café 1, le mors fixe 46 sur la face supérieure 4 de l'embout de buse de sortie vapeur 2 et le mors 40 mobile sous l'embout de buse de sortie vapeur 2 et pose le dispositif 30 sur la base de réception 7 de la machine à café 1. Ensuite, il bascule le levier 50 dans la position rabattue sur la face supérieure 34 du couvercle 32, ce qui a pour effet de faire translater le mors 40 mobile vers le mors fixe 46 pour immobiliser l'embout de buse de sortie vapeur 2 et établir une liaison étanche entre l'embout de buse de sortie vapeur 2 et le conduit d'entrée vapeur 70.

L'utilisateur saisit la poignée 86 de préhension de l'extrémité 36 du conduit de distribution 73 et assemble le logement de réception 39 sur la protubérance 11 de la buse de sortie café 5. L'aimant 37 et la partie magnétique 12 maintiennent cet assemblage. L'utilisateur peut alors poser un récipient sur le repose-tasse 6 et ajuster la position de la buse de sortie café 5 et de l'extrémité 36.

L'utilisateur appuie ensuite sur le bouton de commande 9b de distribution d'un cappuccino, soit l'enchainement d'un cycle de distribution de lait chaud moussé et d'un cycle de distribution d'un café. La chaudière de la machine à café 1 est tout d'abord activée pour générer un flux de vapeur qui circule par l'embout de buse de sortie vapeur 2 et par le conduit d'entrée vapeur 70 pour passer dans le système de moussage 75. Le mélange de l'air, du lait avec la vapeur forme du lait chauffé et moussé qui est distribué par l'extrémité 36 dans le récipient. Lorsque la quantité programmé de lait moussé est atteinte, la machine à café réalise un cycle de distribution d'un café qui s'écoule dans le récipient par la buse sortie café 5. Une boisson du type cappuccino peut donc être réalisée automatiquement après un appui sur le bouton de commande 9b, sans intervention de l'utilisateur.

L'utilisateur peut ensuite séparer l'extrémité 36 de la buse de sortie café 5 et relever le levier 50 en position déployée pour désaccoupler le dispositif 30 de la machine à café 1.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, le mors mobile est rappelé dans la position accouplée sous l'action d'un ressort. Le mors mobile comporte une paroi inclinée sur laquelle agit l'embout de buse de sortie vapeur lorsqu'il est en appui sur le mors fixe pour repousser le mors mobile lors du mouvement horizontal d'accouplement du dispositif. Lorsque l'embout de buse de sortie vapeur est en face de l'ouverture supérieure du réceptacle du mors mobile, le ressort rappelle le mors mobile en position accouplée. Le dispositif comporte un levier de manoeuvre du mors mobile de la position accouplée vers la position désaccouplée.

## Revendications

1. Dispositif (30) de production d'une boisson à base de lait destiné à coopérer avec un embout de buse de sortie vapeur (2) d'une machine à café (1), le dispositif (30) comportant un conduit d'entrée vapeur (70), le dispositif (30) comportant un système d'accouplement à l'embout de buse de sortie vapeur (2) comprenant au moins un mors (40) mobile entre une position accouplée dans laquelle une liaison étanche est établie entre l'embout de buse de sortie vapeur (2) et le conduit d'entrée vapeur (70) et dans laquelle le dispositif (30) ne peut pas être séparé de l'embout de buse de sortie vapeur (2), et une position désaccouplée dans laquelle le dispositif (30) peut être séparé de l'embout de buse de sortie vapeur (2), **caractérisé en ce que** le système d'accouplement comportant un mors fixe (46).

2. Dispositif (30) de production d'une boisson à base de lait selon la revencication 1, **caractérisé en ce que** le mors (40) mobile est mobile en translation.

3. Dispositif (30) de production d'une boisson à base de lait selon l'une quelconque des revendications précédentes, **caractérisé en ce que** le mors (40) mobile est formé par un réceptacle (41) agencé à une extrémité du conduit d'entrée vapeur (70) et destiné à coopérer avec l'embout de buse de sortie vapeur (2).

4. Dispositif (30) de production d'une boisson à base de lait selon l'une quelconque des revendications précédentes, **caractérisé en ce que** le système d'accouplement comporte des moyens de manoeuvre (50, 54) du mors (40) mobile.

5. Dispositif (30) de production d'une boisson à base de lait selon la revendication 4, **caractérisé en ce que** les moyens de manoeuvre comportent un levier (50) de manoeuvre du mors (40) mobile.

6. Dispositif (30) de production d'une boisson à base de lait selon la revendication 5, **caractérisée en ce qu'**il comporte un fond (99) sur lequel il repose et **en ce que** l'effort appliqué sur le levier (50) de manoeuvre pour entrainer le mors (40) mobile entre la position désaccouplée et la position accouplée passe par le fond (99).

7. Dispositif (30) de production d'une boisson à base de lait selon l'une quelconque des revendications 5 ou 6, **caractérisé en ce que** le dispositif (30) comporte un réservoir (31) recevant le lait et un couvercle (32), le systéme d'accouplement étant agencé sur le couvercle (32).

8. Dispositif (30) de production d'une boisson à base de lait selon la revendication 7, **caractérisé en ce que** le levier (50) est agencé sur une face supérieure (34) du couvercle (32) et **en ce que** le levier (50) est mobile en rotation entre une position déployée dans laquelle le mors (40) mobile est en position désaccouplée et une position rabattue sur le couvercle (32) dans laquelle le mors (40) mobile est en position accouplée.

9. Dispositif (30) de production d'une boisson à base de lait selon l'une quelconque des revendications précédentes, **caractérisé en ce que** le système d'accouplement comporte un logement (53) de réception de forme conique destiné à guider l'embout de buse de sortie vapeur (2) vers le mors (40) mobile lors de l'accouplement.

10. Machine à café (1) comportant un dispositif (30) de production d'une boisson à base de lait conforme à l'une des revendications 1 à 9.

11. Machine à café (1) selon la revendication 10, **caractérisée en ce que** l'embout de buse de sortie vapeur (2) est coudé vers le bas.

12. Machine à café (1) selon l'une quelconque des revendications 11 à 12, **caractérisée en ce que** le dispositif (30) de production d'une boisson à base de lait est amené dans un mouvement d'approche horizontal vers la machine à café (1) pour positionner l'embout de buse de sortie vapeur (2) entre le mors fixe (46) et le mors (40) mobile.

13. Machine à café (1) selon l'une quelconque des revendications 10 à 12, **caractérisée en ce que** l'embout de buse de sortie vapeur (2) comporte un joint d'étanchéité (98) permettant d'établir une liaison étanche entre l'embout de buse de sortie vapeur (2) et le conduit d'entrée vapeur (70).

## Patentansprüche

1. Vorrichtung (30) zur Herstellung eines Getränks auf Milchbasis, die dazu bestimmt ist, mit einer Spitze der Dampfaustrittsdüse (2) einer Kaffeemaschine (1) zusammenzuwirken, wobei die Vorrichtung (30) eine Dampfeintrittsleitung (70) aufweist, wobei die Vorrichtung (30) ein System zur Ankopplung an die Spitze der Dampfaustrittsdüse (2) aufweist, das mindestens eine Backe (40) umfasst, die zwischen einer gekoppelten Position, in der eine dichte Verbindung zwischen der Spitze der Dampfaustrittsdüse (2) und der Dampfeintrittsleitung (70) hergestellt ist und in der die Vorrichtung (30) nicht von der Spitze der Dampfaustrittsdüse (2) getrennt werden kann, und einer entkoppelten Position beweglich ist, in der die Vorrichtung (30) von der Spitze der Dampfaustrittsdüse (2) getrennt werden kann, **dadurch gekennzeichnet, dass** das System zur Ankopplung eine feststehende Backe (46) aufweist.

2. Vorrichtung (30) zur Herstellung eines Getränks auf Milchbasis nach Anspruch 1, **dadurch gekennzeichnet, dass** die bewegliche Backe (40) translatorisch beweglich ist.

3. Vorrichtung (30) zur Herstellung eines Getränks auf Milchbasis nach einem der vorhergehenden Ansprüche, **dadurch gekennzeichnet, dass** die bewegliche Backe (40) durch einen Behälter (41) gebildet ist, der an einem Ende der Dampfeinlassleitung (70) angeordnet ist und dazu bestimmt ist, um mit der Spitze der Dampfaustrittsdüse (2) zusammenzuwirken.

4. Vorrichtung (30) zur Herstellung eines Getränks auf Milchbasis nach einem der vorhergehenden Ansprüche, **dadurch gekennzeichnet, dass** das System zur Ankopplung Mittel zur Betätigung (50, 54) der beweglichen Backe (40) aufweist.

5. Vorrichtung (30) zur Herstellung eines Getränks auf Milchbasis nach Anspruch 4, **dadurch gekennzeichnet, dass** die Mittel zur Betätigung einen Hebel (50) zur Betätigung der beweglichen Backe (40) aufweisen.

6. Vorrichtung (30) zur Herstellung eines Getränks auf Milchbasis nach Anspruch 5, **dadurch gekennzeichnet, dass** sie einen Boden (99) umfasst, auf dem sie aufliegt, und dass die auf den Hebel (50) zur Betätigung ausgeübte Kraft, um die bewegliche Backe (40) zwischen der entkoppelten Position und der gekoppelten Position anzutreiben, durch den Boden (99) geht.

7. Vorrichtung (30) zur Herstellung eines Getränks auf Milchbasis nach einem der Ansprüche 5 oder 6, **dadurch gekennzeichnet, dass** die Vorrichtung (30) einen die Milch aufnehmenden Tank (31) und eine Abdeckung (32) aufweist, wobei das System zur Ankopplung an der Abdeckung (32) angeordnet ist.

8. Vorrichtung (30) zur Herstellung eines Getränks auf Milchbasis nach Anspruch 7, **dadurch gekennzeichnet, dass** der Hebel (50) an einer oberen Seite (34) der Abdeckung (32) angeordnet ist, und dass der Hebel (50) zwischen einer ausgeklappten Position , in der sich die bewegliche Backe (40) in der entkoppelten Position befindet, und einer eingeklappten Position auf der Abdeckung (32), in der sich die bewegliche Backe (40) in der gekoppelten Position befindet, drehbeweglich ist.

9. Vorrichtung (30) zur Herstellung eines Getränks auf Milchbasis nach einem der vorhergehenden Ansprüche, **dadurch gekennzeichnet, dass** das System zur Ankopplung ein konisch geformtes Aufnahmegehäuse (53) aufweist, das dazu bestimmt ist, die Spitze der Dampfaustrittsdüse (2) zu der beweglichen Backe (40) bei der Ankoppelung zu führen.

10. Kaffeemaschine (1) mit einer Vorrichtung (30) zur Herstellung eines Getränks auf Milchbasis nach einem der Ansprüche 1 bis 9.

11. Kaffeemaschine (1) nach Anspruch 10, **dadurch gekennzeichnet, dass** die Spitze der Dampfaustrittsdüse (2) nach unten gebogen ist.

12. Kaffeemaschine (1) nach einem der Ansprüche 11 bis 12, **dadurch gekennzeichnet, dass** die Vorrichtung (30) zur Herstellung eines Getränks auf Milchbasis in einer horizontalen Annäherungsbewegung zu der Kaffeemaschine (1) gebracht wird, um die Spitze der Dampfaustrittsdüse (2) zwischen der feststehenden Backe (46) und der beweglichen Backe (40) zu positionieren.

13. Kaffeemaschine (1) nach einem der Ansprüche 10 bis 12, **dadurch gekennzeichnet, dass** die Spitze der Dampfaustrittsdüse (2) eine Dichtung (98) aufweist, die es ermöglicht, eine dichte Verbindung zwischen der Spitze der Dampfaustrittsdüse (2) und Dampfeintrittsleitung (70) herzustellen.

## Claims

1. Device (30) for producing milk-based beverages for cooperation with a steam outlet nozzle tip (2) of a coffee machine (1), the device (30) comprising a steam inlet duct (70), the device (30) comprises a coupling to the steam outlet nozzle tip (2) comprising at least one jaw (40) movable between a coupled position wherein a tight connection is established between the steam outlet nozzle tip (2) and the steam inlet conduit (70) and wherein the device (30) cannot be separated from the steam outlet nozzle tip (2), and an uncoupled position wherein the device (30) can be separated from the steam outlet nozzle tip (2), **characterised in that** the coupling system comprising a fixed jaw (46).

2. Device (30) for producing milk-based beverages according to claim 1, **characterised in that** the jaw (40) mobile is mobile in translation.

3. Device (30) for producing milk-based beverages according to any preceding claim, **characterised in that** the movable jaw (40) is formed by a receptacle (41) arranged at an end of the steam inlet duct (70) and for cooperation with the steam outlet nozzle tip (2).

4. Device (30) for producing milk-based beverages according to any preceding claim, **characterised in that** the coupling system comprises means for manoeuvring (50, 54) the movable jaw (40).

5. Device (30) for producing milk-based beverages according to claim 4, **characterised in that** the means for manoeuvring comprise a lever (50) for manoeuvring the movable jaw (40).

6. Device (30) for producing milk-based beverages according to claim 5, **characterised in that** it comprises a bottom (99) whereon it rests and **in that** the force applied on the manoeuvring lever (50) for driving the movable jaw (40) between the uncoupled position and the coupled position passes through the bottom (99).

7. Device (30) for producing milk-based beverages according to any of claims 5 or 6, **characterised in that** the device (30) comprises a reservoir (31) that receives the milk and a cover (32), the coupling system being arranged on the cover (32).

8. Device (30) for producing milk-based beverages according to claim 7, **characterised in that** the lever (50) is arranged on an upper face (34) of the cover (32) and **in that** the lever (50) is mobile in rotation between a deployed position in which the movable jaw (40) is in the uncoupled position and a folded back position on the cover (32) wherein the movable jaw (40) is in the coupled position.

9. Device (30) for producing milk-based beverages according to any preceding claim, **characterised in that** the coupling system comprises a reception housing (53) of tapered shape intended to guide the steam outlet nozzle tip (2) to the movable jaw (40) during the coupling.

10. Coffee machine (1) comprising a device (30) for producing a milk-based beverage in accordance with one of claims 1 to 9.

11. Coffee machine (1) according to claim 10, **characterised in that** the steam outlet nozzle tip (2) is bent downwards.

12. Coffee machine (1) according to any of claims 11 to 12, **characterised in that** the device (30) for producing a milk-based beverage is brought in a horizontal approach movement to the coffee machine (1) in order to position the steam outlet nozzle tip (2) between the fixed jaw (46) and the movable jaw (40).

13. Coffee machine (1) according to any of claims 10 to 12, **characterised in that** the steam outlet nozzle tip (2) comprises a seal (98) that makes it possible to establish a sealed connection between the steam outlet nozzle tip (2) and the steam inlet conduit (70).
